# EUROPEAN PATENT APPLICATION

(11) **EP 3 276 169 A1**
(43) Date of publication of application: **31.01.2018**
(21) Application number: 16181247.4
(22) Date of filing: 26.07.2016
(51) Int. Cl.: F03D 80/80

(54) **A WIND TURBINE**

(71) Applicant: Siemens Aktiengesellschaft, 80333 München (DE)
(72) Inventor: Krogh, Mikkel Verner, 7330 Brande (DK)

(57) **Abstract**

A wind turbine (1), comprising a generator (27), a frame structure (10), at least one module (11, 13, 19, 39) which is connected to the frame structure (10) by means of a module interface (12, 14, 21, 40) and a machine housing (22) which is connected to the frame structure (10) by means of a frame interface (35), wherein the at least one module (11, 13, 19, 39) comprises a module housing (15, 16, 20, 41) and electrical components which are associated with the generator (27) and which are arranged inside the module housing (15, 16, 20, 41), wherein the frame structure (10), the at least one module (11, 13, 19, 39) and the machine housing (22) each face an environment (23) of the wind turbine (1), and wherein the frame structure (10) is carrying the at least one module (11, 13, 19, 39).

One advantage is that no canopy is required and the complexity of the wind turbine (1) can be significantly reduced because the at least one module (11, 13, 19, 39) is accessible from the outside and thus exchangeable without affecting other components like the machine housing (22), the generator (27) or other modules (11, 13, 19, 39).

## Description

The present invention relates to a wind turbine.

Modern wind turbine rotor blades are built from fiber-reinforced plastics. A rotor blade typically comprises an airfoil having a rounded leading edge and a sharp trailing edge. The rotor blade is connected with its blade root to a hub of the wind turbine. The rotor blade is connected to the hub by means of a pitch bearing that allows a pitch movement of the rotor blade. The pitch bearing normally is a rolling element bearing. A longer rotor blade experiences more forces of the wind that interacts with the rotor blade. The forces are transferred over the pitch bearing of the rotor blade to the hub. For transforming a rotational movement of the hub and the rotor blades a generator is provided. A rotor of the generator may be connected to the hub, wherein a stator of the generator may be connected to a nacelle. The nacelle may be connected to a tower of the turbine. The nacelle is covered by means of a canopy to protect the arrangements of the nacelle.

EP 2 063 119 A2 shows a nacelle with a module, which is separately designed, manageable and comprises a housing part. The module is connectable to at least one further module of the nacelle, which is also separately designed, manageable and has a housing part, wherein the housing part of the module builds in the assembled status of the nacelle, which comprises several modules, a part of the housing of the nacelle. A method for the stepwise assembly of such a nacelle aloft is also disclosed.

EP 2 573 387 A1 shows a nacelle for a wind turbine comprising a generator, a load-carrying structure, a support structure, an electrical system, a yaw system, a control system and a housing. The generator comprises a rotating part and a stationary part and the stationary part is connectable to the load-carrying structure. The load-carrying structure comprises the yaw system and the control system. The support structure comprises the electrical system and the support structure is connectable to the load-carrying structure. The generator, the load-carrying structure and the support structure are separate modules and the separate modules and the segmented housing are connectable at an erection site of the wind turbine to build the nacelle.

It is one object of the present invention to provide an improved wind turbine.

Accordingly, a wind turbine is provided. The wind turbine comprises a generator, a frame structure, at least one module which is connected to the frame structure by means of a module interface and a machine housing which is connected to the frame structure by means of a frame interface. The at least one module comprises a module housing and electrical components which are associated with the generator and which are arranged inside the module housing. The frame structure, the at least one module and the machine housing each face an environment of the wind turbine. The frame structure is carrying the at least one module.

The generator comprises a stator and a rotor. The wind turbine comprises a hub which is connected to the rotor of the generator. The generator, in particular the stator of the generator, is connected to the machine housing. The frame structure may be a framework or a lattice structure, which is connected to the machine housing. The module interface and/or the frame interface may comprise connecting means like screws, bolts, snap joints and/or welds etc. for fixing the module to the frame structure or the frame structure to the machine housing. The module housing may be provided as a container, a box, a cell, a compartment or a cabinet. The machine housing, the at least one module and/or the frame structure may be seen as a nacelle or an open nacelle.

"Wind turbine" presently refers to an apparatus converting the wind's kinetic energy into rotational energy, which may again be converted to electrical energy by the apparatus.

"Electrical components which are associated with the generator" may mean components which are electrically connected to the generator. In particular, electrical components which are electrically interconnected between the generator and a grid which is supplied with the generated electricity may be provided.

To "face an environment of the wind turbine" means that at least portions of these components are accessible from the outside without overcoming a barrier like a cover or a common canopy which covers all modules and the machine housing. Preferably, environment means an external environment. Nevertheless, it is understood that the frame structure can be covered by means of cover members and the like. Further, it is understood that portions of the frame structure may extent into the machine housing and/or into the at least one module. Furthermore, the frame structure may be seen as a partially open frame structure.

"The frame structure is carrying" means that gravitational forces of the at least one module, disturbance forces and/or other arising forces at the at least one module are guided from the at least one module through the carrying structure to the machine housing.

In particular, at least two, three, four or five modules are connected to the frame structure, wherein each module has its own interface with the frame structure. In particular, a modular system for a nacelle is provided, wherein the modules are exchangeable separately without affecting the other modules when changing one module. In particular, all modules are placed outside the frame structure and/or none of the modules is encapsulated in a cover or a common canopy which covers all modules and the machine housing.

The advantages of the wind turbine may be one or more of the following: No canopy is required and the complexity of the wind turbine can be significantly reduced because the at least one module is accessible from the outside and is thus exchangeable without affecting other components like the machine housing, the generator or other modules. Further, an open or accessible frame structure gives the option to arrange additional arrangements like a cooling arrangement and/or a helipad platform without affecting the at least one module, the machine housing, the generator and/or other modules.

According to an embodiment, the frame structure comprises profiled carriers which are connected to each other to form the frame structure.

"Profiled carrier" means for example a beam or a bar. The beam can be a T-beam or an I-beam. Alternatively, the cross section of the beam can be U-, Z- or O-shaped. Further, the outer contour of the cross section of the beam or the bar can have a rectangular shape. Thus, a high stiffness and a low weight of the frame structure can be achieved. Further, more effective constructions for the frame structure and flexible arrangements for additional components may be provided. The frame structure is also known as rear end support. The frame structure may comprise at least two longitudinal beams protruding from the machine housing. These beams may be supported by means of bars and the like for stiffening the frame structure. The frame structure may comprise longitudinal, horizontal and/or diagonal arranged bars, beams or carriers which are connected to form a carrying structure. Further, ropes, in particular steel ropes, can be used for receiving tensile stress.

According to a further embodiment, the at least one module comprises an over voltage protection box and/or a cooling pump and/or a fire blanket and/or a fire extinguisher and/or a control cabinet for aviation light and/or a converter module and/or a choking coil which is arranged inside the module housing.

The over voltage protection box, the cooling pump, the fire blanket, the fire extinguisher and the control cabinet for aviation light can be denoted as "auxiliary equipment". Auxiliary equipment can be arranged in a first submodule. The converter module and/or the choking coil is comprised by an "electrical cabinet" to form a second submodule. The electrical cabinet is provided for the main power of the generator. Components like the electrical cabinet and auxiliary equipment have strong interfaces. For this reason complexity is greatly reduced, by forming a module of these components. This is achieved by assembling these components in the at least one module simplifying the assembly of the wind turbine. The at least one module comprises in particular the electrical cabinet and auxiliary equipment.

According to a further embodiment, the wind turbine comprises a helipad platform which is connected to the frame structure.

In particular, the helipad platform is connected to the frame structure by means of its own supporting structure. By supporting the helipad platform by its own supporting structure and not a canopy, the interface is also simplified. The supporting structure may comprise longitudinal, horizontal and/or diagonal arranged bars, beams or carriers which are connected to form a carrying structure.

According to a further embodiment, the wind turbine comprises a cooling arrangement which is connected to the frame structure, the machine housing or the at least one module.

The cooling arrangement may be supported by means of its own supporting structure. By supporting the cooling arrangement by its own supporting structure and not a canopy, the interface is further simplified. The cooling arrangement may comprise a cooler including water as cooling liquid. The cooling liquid may be transported by means of the cooling pump. The cooling liquid may cool a hydraulic station for pitching the blades and/or a hydraulic station for yawing the nacelle and/or the converter and/or the transformer.

According to a further embodiment, the cooling arrangement is arranged above or beside the at least one module.

Thus, a good accessibility for cool air from outside can be provided and thus overheating of components to be cooled can be prevented.

According to a further embodiment, the cooling arrangement is rotatably supported relative to the at least one module.

Thus, different modes can be provided. In a folded position the cooling arrangement is arranged parallel to a side wall of the at least one module. This has the advantage that less space is needed so that an advantageous storage and transport mode can be provided. In another position, the cooling arrangement is arranged essentially perpendicular to the side wall of the at least one module. This position may be the operation position of the cooling arrangement. The rotational movement of the cooling arrangement may be fulfilled by means of an actuator. The actuator may be a hydraulic system, in particular a hydraulic cylinder, a pneumatic system and/or an electric motor. Preferably, hinges are provided to enable a rotational movement of the cooling arrangement.

According to a further embodiment, the wind turbine comprises a crane which is connected to the machine housing, the frame structure or the at least on module.

The crane may be used for service work or other assembly operations.

According to a further embodiment, the frame structure protrudes from the machine housing.

Thus, a good accessibility of the frame structure and of arrangements or modules to be connected to the frame structure can be provided. The machine housing is also known as bedframe.

According to a further embodiment, the wind turbine comprises a first module and a second module, wherein the first module comprises a first module housing and an over voltage protection box and/or a cooling pump and/or a fire blanket and/or a fire extinguisher and/or a control cabinet for aviation light and/or a converter module and/or a choking coil which are arranged inside the first module housing, and wherein the second module comprises a second module housing and a transformer arranged inside the second module housing.

Preferably, the first module comprises the electrical cabinet and auxiliary equipment.

According to a further embodiment, the first module is connected to the frame structure by means of a first module interface and the second module is connected to the frame structure by means of a second module interface.

Thus, the first module and the second module have separate interfaces with the frame structure so that the modules are exchangeable without affecting each other. A replacement because of damage of components of one of the modules can be provided with low effort.

According to a further embodiment, the wind turbine comprises a third module and a fourth module, wherein the third module comprises a third module housing and an over voltage protection box and/or a cooling pump and/or a fire blanket and/or a fire extinguisher and/or a control cabinet for aviation light and/or a converter module and/or a choking coil which are arranged inside the third module housing, and wherein the fourth module comprises a fourth module housing and a transformer arranged inside the fourth module housing.

Preferably, the third module comprises the electrical cabinet and auxiliary equipment. The fourth module may comprise a second transformer.

According to a further embodiment, the third module is connected to the frame structure by means of a third module interface and the fourth module is connected to the frame structure by means of a fourth module interface.

Thus, the third module and the fourth module have separate interfaces with the frame structure so that the modules are exchangeable without affecting each other, other modules and the machine housing. All modules, in particular the first module, the second module, the third module and/or the fourth module, are located outside the machine housing.

According to a further embodiment, the first module and the third module are arranged parallel to each other and/or the second module and the fourth module are arranged parallel to each other.

"Parallel to each other" means that side walls of the first module and the third module are arranged parallel to each other. Preferably, the first module and the third module are arranged symmetrically with respect to a center plane. Also, the second module and the fourth module could be arranged symmetrically with respect to the center plane. Preferably, the center plane divides the wind turbine essentially in two equal parts.

According to a further embodiment, the wind turbine comprises a tower which is connected to the machine housing, wherein the machine housing comprises a yaw system which enables a rotation between the tower and the machine housing.

A rotation may occur around a longitudinal axis of the tower. The frame structure, a hub and arrangements fixed to the frame structure and the hub rotate together with the machine housing.

Any embodiment of the first aspect may be combined with any embodiment of the first aspect to obtain another embodiment of the first aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 is a perspective view of a wind turbine;
Fig. 2 is a perspective view of a wind turbine rotor blade;
Fig. 3 is a perspective view of a nacelle for the wind turbine according to Fig. 1;
Fig. 4 is a schematic side view of the nacelle according to Fig. 3;
Fig. 5 is a schematic rear view of the nacelle according to Fig. 3;
Fig. 6A is a side view of a cooling arrangement for a nacelle according to Fig. 3; and
Fig. 6B is a top view of the cooling arrangement according to Fig. 6A.

In the Figures, like reference numerals designate like or functionally equivalent elements, unless otherwise indicated.

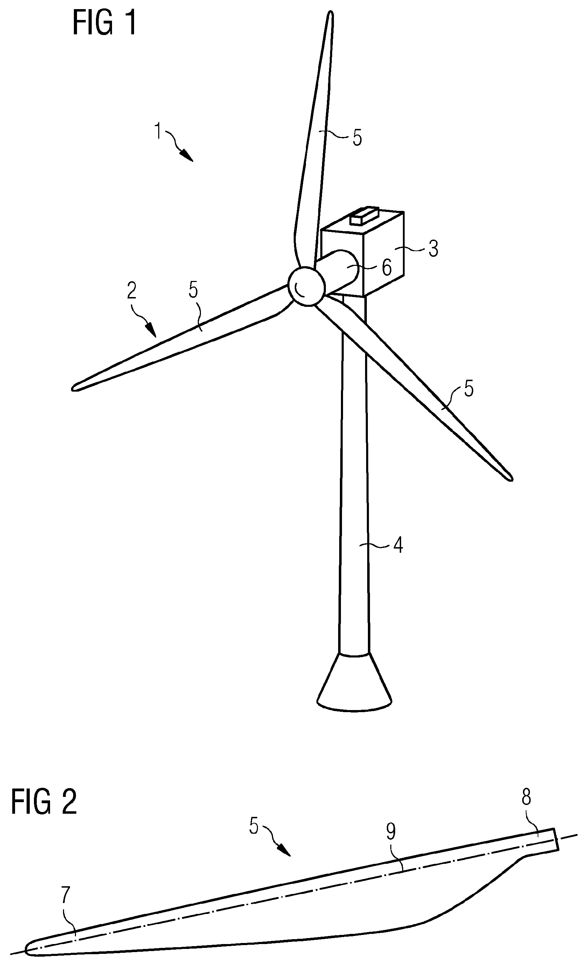

Fig. 1 shows a wind turbine 1.

The wind turbine 1 comprises a rotor 2 connected to a generator (not shown) arranged inside a nacelle 3. The nacelle 3 is arranged at the upper end of a tower 4 of the wind turbine 1.

The rotor 2 comprises three rotor blades 5. The rotor blades 5 are connected to a hub 6 of the wind turbine 1. Rotors 2 of this kind may have diameters ranging from, for example, 30 to 160 meters or even more. The rotor blades 5 are subjected to high wind loads. At the same time, the rotor blades 5 need to be lightweight. For these reasons, rotor blades 5 in modern wind turbines 1 are manufactured from fiber-reinforced composite materials. Therein, glass fibers are generally preferred over carbon fibers for cost reasons. Oftentimes, glass fibers in the form of unidirectional fiber mats are used.

Fig. 2 shows a rotor blade 5.

The rotor blade 5 comprises an aerodynamically designed portion 7, which is shaped for optimum exploitation of the wind energy and a blade root 8 for connecting the rotor blade 5 to the hub 6. The blade 5 is configured to rotate around its longitudinal axis 9 to adjust the wind turbine 1 to a wind speed. The adjustment may be fulfilled by means of a hydraulic system (not shown).

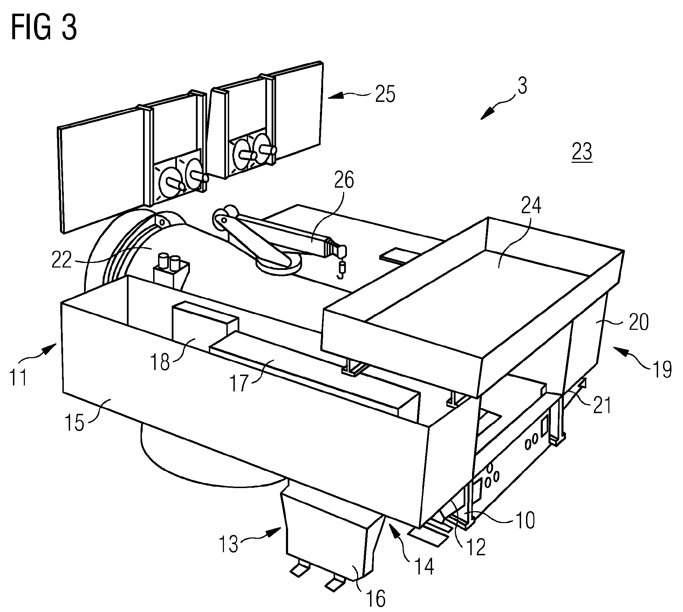

Fig. 3 shows a perspective view of a nacelle 3 for the wind turbine 1 according to Fig. 1.

The nacelle 3 comprises a frame structure 10, a first module 11 which is connected to the frame structure 10 by means of a first module interface 12, a second module 13 which is connected to the frame structure 10 by means of second module interface 14. Such a module interface 12, 14 can be seen as an entity of all connecting portions between the module 11, 13 and the frame structure 10. Preferably, the first module interface 12 is located at another portion of the frame structure 10 than the second module interface 14. The second module 13 is located beneath the first module 11 and beneath the frame structure 10. Thus, the accessibility of the first module 11 is ensured since the second module 13 does not constitute a barrier. Hence, the modules 11, 13 are exchangeable without affecting each other.

The first module 11 comprises a first module housing 15 and the second module 13 comprises a second module housing 16. An electrical cabinet 17 and auxiliary equipment 18 are located inside the first module housing 15 and may constitute two separate submodules. The electrical cabinet 17 is associated with the generator (not shown in Fig. 3) of the wind turbine 1 and may comprise a converter module and/or a choking coil which is electrically connected to the generator. Auxiliary equipment 18 may comprise an over voltage protection box and/or a cooling pump and/or a fire blanket and/or a fire extinguisher and/or a control cabinet for aviation light. A location of the electrical cabinet 17 and the auxiliary equipment 18 inside one module 11 has the advantage that both can be mounted and exchanged as a package (first module 11) with low effort and without affecting other module 13.

Further, a transformer is arranged inside the second module housing 16. The second module 13 may also be placed at a substation and/or onshore or offshore. The substation may be at or near to the tower 4.

The wind turbine 1 comprises further a third module 19. The third module 19 comprises a third module housing 20 and an over voltage protection box and/or a cooling pump and/or a fire blanket and/or a fire extinguisher and/or a control cabinet for aviation light and/or a converter module and/or a choking coil which are arranged inside the third module housing 20. These appliance may be arranged in submodules, in particular two containers or rooms. The third module 19 is connected to the frame structure 10 by means of a third module interface 21. Preferably, the third module 19 is provided similar to the first module 11. Preferably, the main components of the first module 11 and the third module 18 are essentially identical.

Further, the wind turbine 1 comprises a machine housing 22 which is connected to the frame structure 10.

The frame structure 10, the modules 11, 13, 19 and the machine housing 22 each face an environment 23 of the wind turbine 1.

The wind turbine 1 comprises a helipad platform 24 which is connected to the frame structure 10. The helipad platform 24 is configured so that a helicopter (not shown) can land on the platform 24.

Further, a cooling arrangement 25 is provided and arranged above the machine housing 22 and the modules 11, 13 und 19. The cooling arrangement 25 is configured to cool a converter or transformer which is connected to the generator and/or a hydraulic station e.g. for moving the machine housing 22 relative to the tower 4 and/or for moving the blades 5 relative to the hub 6. The cooling arrangement 25 may comprise a cooler which uses water as a cooling liquid. The cooling liquid may be transported by means of the cooling pump.

The wind turbine 1 comprises a crane 26 which is connected to the machine housing 22. The crane 26 may also be connected to the frame structure 10 or the module 11, 13, 19 and may be used for service work or other assembly operations.

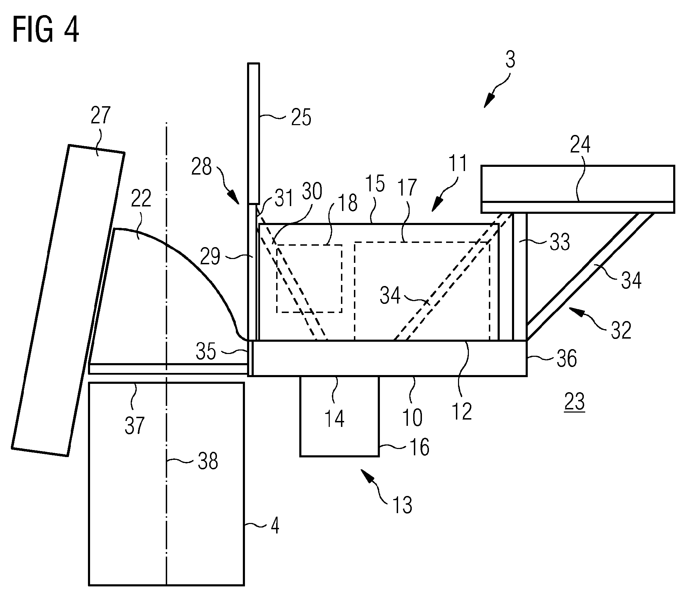

Fig. 4 shows a schematic side view of the nacelle 3 according to Fig. 3.

The frame structure 10 is carrying at least the modules 11, 13, 19. A generator 27 for converting rotational movement of the hub 6 into electricity is connected to the machine housing 22. Alternatively, a stator of the generator 27 may be provided inside the machine housing 22 and a rotor of the generator 27 may be provided inside the hub 6 and may be connected to the hub 6.

The cooling arrangement 25 is supported by means of its own supporting structure 28 comprising vertically arranged bars 29 and diagonally arranged bars 30. The bars 29, 30 are connected to each other to form a node 31. Further, the bars are connected to the frame structure 10. Alternatively, the cooling arrangement 25 or its support structure 28 may be connected to the machine housing 22, one module 11, 13, 19 or more than one module 11, 13, 19.

Further, the helipad platform 24 is supported by its own supporting structure 32 comprising vertically arranged bars 33 and diagonally arranged bars 34 which are connected to the helipad platform 24 and the frame structure 10.

Bars 29, 30 and/or bars 33, 34 may be arranged like a lattice structure or framework in particular in connection with the frame structure 10.

The machine housing 22 is connected to the frame structure 10 by means of a frame interface 35. The frame structure 10 protrudes from the machine housing 22 and is fixed to the frame structure 10. Further, a portion of the frame structure 10 may be arranged inside the machine housing 22.

The helipad platform 24 is arranged above the first module 11. Furthermore, the helipad platform 24 is arranged at an end 36 of the frame structure 10 averted from the frame interface 35.

The tower 4 is connected to the machine housing 22 at an upper end 37 of the tower 4, wherein the machine housing 22 may comprises a yaw system which enables a rotation between the tower 4 and the machine housing 22 around a longitudinal axis 38 of the tower 4. The frame structure 10, the hub 6 and arrangements fixed to the frame structure 10 and the hub 6 rotate together with the machine housing 22.

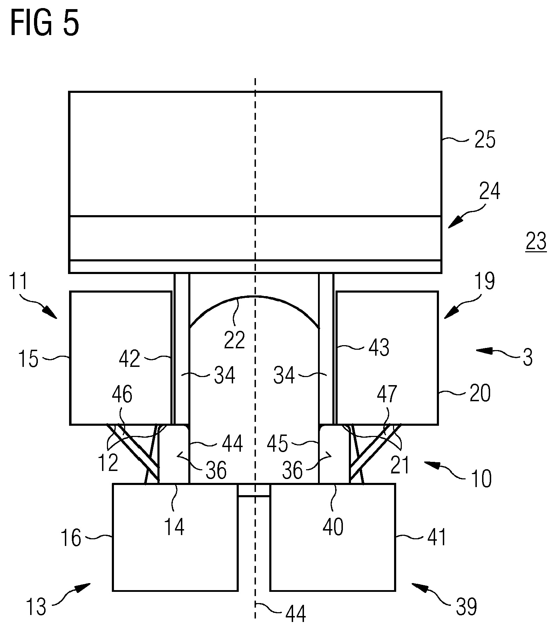

Fig. 5 shows a schematic rear view of the nacelle 3 according to Fig. 3.

A fourth module 39 is connected to the frame structure 10 by means of fourth module interface 40. The fourth module 39 comprises a fourth module housing 41. A further transformer may be arranged inside the fourth module housing 41. Preferably, the fourth module 39 is essentially identical to the second module 13. Preferably, walls 42, 43 of the first module housing 15 and the second module housing 20 are arranged parallel to each other. The first module 11 and the third module 19 are preferably arranged symmetrically with respect to a center plane 44. Also, the second module 13 and the fourth module 39 could be arranged symmetrically with respect to the center plane 44. Preferably, the center plane 44 divides the wind turbine 1 essentially in two equal parts.

Alternatively, the electrical cabinet 17, auxiliary equipment 18, the transformer and/or the further transformer are arranged in a separate module (not shown).

The second module 13 and the fourth module 39 are arranged hanging relative to the frame structure 10 and are connected to a lower surface of the frame structure 10. The frame structure 10 is carrying the modules 11, 13, 19, 39.

The frame structure 10 comprises at least two longitudinal arranged beams 44, 45 and bars 46, 47 which are connected to the beams 44, 45 for stiffening the frame structure 10. Preferably, the frame structure 10 is provided as a lattice structure.

The module housings 15, 16, 20, 41 may be provided as containers, boxes, cells, compartments or cabinets.

By placing components like electrical cabinets 17, auxiliary equipment 18 and/or transformers inside the module housings 15, 16, 20, 41 these components are protected from the environment (rain, humidity, wind etc.). For this reason no canopy is required.

By forming at least four modules 11, 13, 19, 39 the assembly process of the wind turbine 1 can be done more efficiently as the process can be done in two separate processes given that the electrical system can be divided in two independent systems.

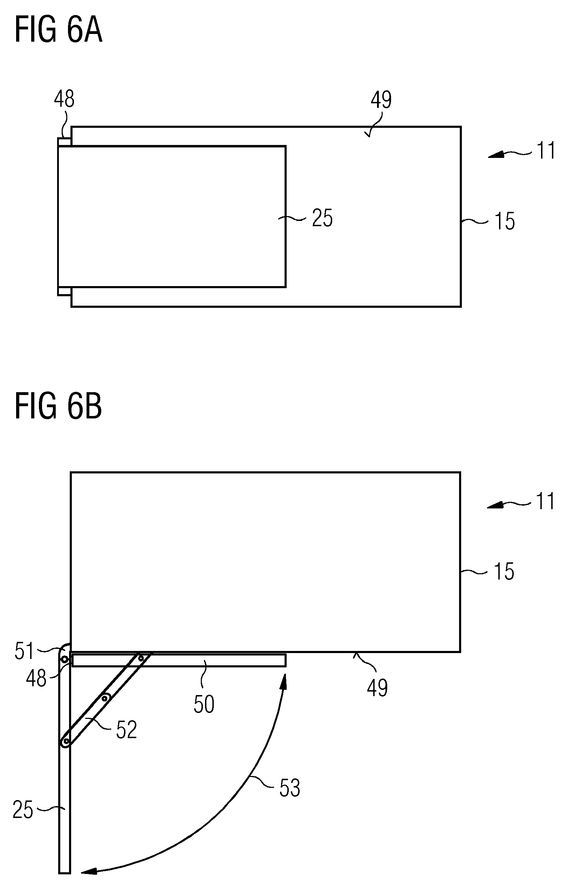

Fig. 6A shows a side view of a cooling arrangement 25.

The cooling arrangement 25 is arranged beside the at least one module 11, 13, 19, 39 in particular beside the first module 11. The cooling arrangement 25 is hinged in one side 48 of the cooling arrangement 25 and can be rotated. Thus, the cooling arrangement 25 is rotatable supported relative to the at least one module 11, 13, 19, 39. As shown in Fig. 6A the cooling arrangement 25 is arranged parallel to and/or along a side surface 49 of the module 11 in its folded position. This position may be a transport and/or storage position. Thus, space requirements can be reduced.

Fig. 6B shows a top view of the cooling arrangement according to Fig. 6A.

Fig. 6B shows the cooling arrangement 25 in an open position, wherein the cooling arrangement 25 is arranged essentially perpendicular to the side surface 49 of the module 11. The cooling arrangement 25 is connected to a plate 50 by means of a hinge 51, wherein the plate 50 is connected to the side surface 49 of the module 11. Furthermore, a foldable hinge 52 is connected to the plate 50 and the cooling arrangement 25 so as to support the rotational movement of the cooling arrangement 25 relative the plate 50 or the side surface 49. The foldable hinge 52 may also block or secure the open position.

An angle 53 between the cooling arrangement 25 and the plate 50 or the side surface 49 may be 90° in the open position. This position may be the operation position of the cooling arrangement 25. The rotational movement of the cooling arrangement 25 may be fulfilled by means of an actuator (not shown). The actuator may be a hydraulic system, in particular a hydraulic cylinder, a pneumatic system and/or an electric motor. Further, the actuator may block or secure the open position and/or the folded position (as shown in Fig. 6A).

The plate 50, the hinge 51, the foldable hinge 52 and/or the actuator may be comprised by a moving arrangement.

Although the present invention has been described in accordance with preferred embodiments, it is obvious for the person skilled in the art that modifications are possible in all embodiments.

## Claims

1. A wind turbine (1), comprising a generator (27), a frame structure (10), at least one module (11, 13, 19, 39) which is connected to the frame structure (10) by means of a module interface (12, 14, 21, 40) and a machine housing (22) which is connected to the frame structure (10) by means of a frame interface (35), wherein the at least one module (11, 13, 19, 39) comprises a module housing (15, 16, 20, 41) and electrical components which are associated with the generator (27) and which are arranged inside the module housing (15, 16, 20, 41), wherein the frame structure (10), the at least one module (11, 13, 19, 39) and the machine housing (22) each face an environment (23) of the wind turbine (1), and wherein the frame structure (10) is carrying the at least one module (11, 13, 19, 39).

2. The wind turbine according to claim 1,
wherein the frame structure (10) comprises profiled carriers (44, 45, 46, 47) which are connected to each other to form the frame structure (10).

3. The wind turbine according to claim 1 or 2,
wherein the at least one module (11, 13, 19, 39) comprises an over voltage protection box and/or a cooling pump and/or a fire blanket and/or a fire extinguisher and/or a control cabinet for aviation light and/or a converter module and/or a choking coil which is arranged inside the module housing (15, 16, 20, 41).

4. The wind turbine according to one of claims 1 - 3, further comprising a helipad platform (24) which is connected to the frame structure (10).

5. The wind turbine according to one of claims 1 - 4, further comprising a cooling arrangement (25) which is connected to the frame structure (10), the machine housing (22) or the at least one module (11, 13, 19, 39).

6. The wind turbine according to claim 5,
wherein the cooling arrangement (25) is arranged above or beside the at least one module (11, 13, 19, 39).

7. The wind turbine according to one of claims 5 or 6,
wherein the cooling arrangement (25) is rotatably supported relative to the at least one module (11, 13, 19, 39).

8. The wind turbine according to one of claims 1 - 7, further comprising a crane (26) which is connected to the machine housing (22), the frame structure (10) or the at least one module (11, 13, 19, 39).

9. The wind turbine according to one of claims 1 - 8,
wherein the frame structure (10) protrudes from the machine housing (22).

10. The wind turbine according to one of claims 1 - 9, further comprising a first module (11) and a second module (16), wherein the first module (11) comprises a first module housing (15) and an over voltage protection box and/or a cooling pump and/or a fire blanket and/or a fire extinguisher and/or a control cabinet for aviation light and/or a converter module and/or a choking coil which are arranged inside the first module housing (15), and wherein the second module (13) comprises a second module housing (16) and a transformer arranged inside the second module housing (16).

11. The wind turbine according to claim 10,
wherein the first module (11) is connected to the frame structure (10) by means of a first module interface (12) and the second module (13) is connected to the frame structure (10) by means of a second module interface (14).

12. The wind turbine according to claim 10 or 11, further comprising a third module (19) and a fourth module (39), wherein the third module (19) comprises a third module housing (20) and an over voltage protection box and/or a cooling pump and/or a fire blanket and/or a fire extinguisher and/or a control cabinet for aviation light and/or a converter module and/or a choking coil which are arranged inside the third module housing (20), and wherein the fourth module (40) comprises a fourth module housing (41) and a transformer arranged inside the fourth module housing (41).

13. The wind turbine according to claim 12,
wherein the third module (19) is connected to the frame structure (10) by means of a third module interface (21) and the fourth module (39) is connected to the frame structure (10) by means of a fourth module interface (40).

14. The wind turbine according to claim 12 or 13,
wherein the first module (11) and the third module (19) are arranged parallel to each other and/or the second module (13) and the fourth module (39) are arranged parallel to each other.

15. The wind turbine according to one of claims 1 - 14, further comprising a tower (4) which is connected to the machine housing (22), wherein the machine housing (22) comprises a yaw system which enables a rotation between the tower (4) and the machine housing (22).
